# EUROPÄISCHE PATENTSCHRIFT

(11) **EP 1 213 464 B1**
(45) Veröffentlichungstag und Bekanntmachung des Hinweises auf die Patenterteilung: **11.08.2004**
(21) Anmeldenummer: 01124032.2
(22) Anmeldetag: 09.10.2001
(51) Int. Cl.: F02M 21/06, F02M 25/025

(54) **Verfahren und Anordnung zur Bereitstellung eines zündfähigen Arbeitsgases aus einem Kryo-Kraftstoff**
Method and apparatus for supplying an ignitable gas from a cryogenic fuel
Procédé et appareil d'alimentation d'un gaz inflammable d'un carburant cryogénique

(30) Priorität: 07.12.2000 DE 10060788
(43) Veröffentlichungstag der Anmeldung: 12.06.2002
(73) Patentinhaber: Bayerische Motoren Werke Aktiengesellschaft, 80809 München (DE)
(72) Erfinder: Ringler, Jürgen, 86438 Kissing (DE); Fickel, Hans-Christian, 85368 Moosburg (DE)

(56) Entgegenhaltungen:
- DE-A- 19 602 881
- GB-A- 1 332 024
- US-A- 3 948 224
- US-A- 3 983 882

## Beschreibung

Die Erfindung betrifft ein Verfahren und eine Anordnung zur Bereitstellung eines zündfähigen Arbeitsgases aus einem Kryo-Kraftstoff für eine Brennkraftmaschine.

Die Speicherung von Kryo-Kraftstoffen - beispielsweise Wasserstoff - d.h. Kraftstoffen deren Siedepunkt unterhalb üblicher Umgebungstemperaturen liegt, kann in isolierten Tankanordnungen erfolgen. Letztere, auch als Kryo-Tanks bezeichnete Tankanordnungen zeichnen sich neben einem vergleichsweise geringen Eigengewicht auch durch ein günstiges Bauraum/Speicherkapazitäts-Verhältnis aus. Die zur flüssigen Speicherung des Kryokraftstoffes vorgesehenen Tankanordnungen werden vorzugsweise unter einem vorbestimmten Überdruck mit unterkühltem, flüssigem Kraftstoff befüllt. Das durch den Tankdruck bestimmte Temperaturniveau kann durch Kühleinrichtungen oder durch Verdampfen von Kraftstoff, aufrecht erhalten werden

Aus der US-A-3,983,882 ist eine Anordnung sowie ein Verfahren offenbart, zur Bereitstellung eines brennfähigen Arbeitsgases aus kryogen gespeicherten Kryo-Kraftstoff und sauerstoffhaltiger Ansaugluft in dem Brennraum einer Brennkraftmaschine. Das Abgas der Brennkraftmaschine wird in einem Wärmetauscher abgekühlt und das äuskondensierte Wasser wird den Zylindern der Brennkräftmaschine rückgeführt und der Ansaugluft beigemischt.

Der Erfindung liegt die Aufgabe zugrunde, ein Verfahren und eine Vorrichtung zur Bereitstellung eines zündfähigen Arbeitsgases aus einem Kryo-Kraftstoff zu schaffen, bei welchem eine vorgegebene stöchiometrische Zusammensetzung, sowie der kalorische Zustand des Arbeitsgases auf zuverlässige Weise in einem engen Toleranzbereich eingehalten werden kann.

Diese Aufgabe wird erfindungsgemäß gelöst durch ein Verfahren zur Bereitstellung eines brennfähigen Arbeitsgases für eine Brennkraftmaschine aus einer ein Oxidationsmittel enthaltenden Gasfraktion und einem kryogen gespeicherten Kryo-Kraftstoff, bei welchem der Kryo-Kraftstoff aus einem Wärmeisolierten Kraftstoff-Vorratsbehältnis entnommen wird, wobei zumindest ein' Teil des aus einem Abgas ausgefällten

Wassers abgeleitet und erneut in einen Brennraum der Brennkraftmaschine eingebracht wird und der entnommene Kraftstoff durch einen Wärmetauscher geleitet und hierbei erwärmt wird, wobei durch den Wärmetauscher ein Abgasteilstrom geleitet wird und auf eine Temperatur abgekühlt wird, bei welcher zumindest ein Teil des in dem Abgas enthaltenen Wassers ausgefällt wird.

Dadurch wird es auf vorteilhafte Weise möglich, unter Nutzung des Kältepotentiales des in dem Kryo-Tank bevorrateten Kraftstoffes den kalorischen Zustand des Arbeitsgases sowie dessen Zusammensetzung, präzise einzustellen. In weiterhin vorteilhafter Weise wird es möglich, das Verdichtungsverhältnis - und damit den Prozesswirkungsgrad ohne unzulässige Zunahme der Klopfneigung, zu erhöhen.

Gemäß einer besonders bevorzugten Ausführungsform der Erfindung wird lediglich ein Abgas-Teilstrom vorzugsweise von weniger als 30% des Abgasstromes durch den Wärmetauscher geleitet. Dadurch wird es auf vorteilhafte Weise möglich, die gewünschte Wassermenge bei vergleichsweise geringer Aufheizung des Kryo-Kraftstoffes zu erreichen. Der über den Wärmetauscher geleitete und in diesem zumindest teilweise getrocknete Abgasstrom kann anschließend wieder mit dem restlichen Abgasstrom vereinigt werden. Die Abzweigung des zur Wasserrückgewinnung vorgesehenen Abgasteilstromes erfolgt vorzugsweise über eine Dosiereinrichtung. Das Abzweigungsverhältnis wird vorzugsweise in Abhängigkeit von dem Betriebszustand der Brennkraftmaschine insbesondere im Hinblick auf den momentanen Wasserbedarf, eingeregelt.

Eine im Hinblick auf eine besonders präzise Einstellung der Zusammensetzung des Arbeitsgases sowie im Hinblick auf eine besonders hohe Leistungsdichte vorteilhafte Ausführungsform der Erfindung ist dadurch gegeben, daß das zurückgewonnene Wasser separat von den Gasfraktionen des Arbeitsgases in den Brennraum eingebracht wird. Die Einbringung kann unter Zwischenschaltung einer Hochdruckpumpe in das Arbeitsgas, vorzugsweise unmittelbar nach Schließen des zur Steuerung des Ansaugluftstromes vorgesehenen Einlaßventiles, eingebracht werden.

Eine insbesondere für einen Teillastbetrieb besonders vorteilhafte Ausführungsform des Verfahrens ist dadurch gegeben, daß eine brennfähige Arbeitsgasmischung im Rahmen eines äußeren Gemischbildungsschrittes außerhalb des Brennraumes gebildet wird.

Alternativ hierzu ist es auch möglich, die brennfähige Arbeitsgasmischung im Rahmen eines inneren Gemischbildungsschrittes innerhalb des Brennraumes zu bilden. Hierdurch wird eine besonders hohe Sicherheit gegen Rückzündungen erreicht.

Gemäß einem besonderen Aspekt der vorliegenden Erfindung erfolgt die Wahl der Gemischbildung vorzugsweise in Abhängigkeit vom Betriebszustand der Brennkraftmaschine. Hierdurch wird es möglich den für den momentanen Belastungszustand der Brennkraftmaschine optimalen Betriebspunkt einzustellen

Die Einbringung des zur Brenngasbefeuchtung vorgesehenen Wassers erfolgt bei einer Verfahrensführung mit innerer Gemischbildung vorzugsweise indem das Wasser gemeinsam mit der Wasserstofffraktion - separat von der Ansaugluft in den Brennraum eingebracht wird.

Eine besonders effektive Ausfällung des Wassers aus dem Abgasteilstrom erfolgt gemäß einer besonders bevorzugten Ausführungsform der Erfindung indem der Kraftstoff zumindest abschnittsweise in flüssigem Zustand durch den Wärmetauscher geleitet wird. Hierdurch können in dem Wärmetauscher Zonen gebildet werden, in welchen das Abgas bei geringer Verweilzeit unter den Taupunkt abgekühlt wird. In vorteilhafter Weise erfolgt hierbei der Wärmeaustausch zwischen dem Abgas und dem Kraftstoff nach dem Gegenstromprinzip.

Es ist in vorteilhafter Weise möglich, den zum Kraftstoff-Wärmetauscher abgezweigten Abgasstrom über einen Zwischenkühler vorab abzukühlen, zur Verringerung der Kühlleistung des Kraftstoff-Wärmetauschers. In vorteilhafter Weise erfolgt die Abzweigung des zur Wasserrückgewinnung vorgesehenen Abgas-Teilstromes erst nach Zwischenschaltung eines zur Reduzierung der Abgasdruckschwingungen vorgesehehen Abgas-Topfes. Hierdurch wird erreicht, daß das Abgas bereits durch das Abgasleitungssystem abgekühlt wird.

Der Kryo-Tank ist in vorteilhafter Weise derart ausgebildet, daß der darin aufgenommene Kraftstoff insbesondere Wasserstoff eine Temoperatur von weniger als 24K aufweist.

Die dem Brennraum zugeführte Wassermenge wird gemäß einer besonders bevorzugten Verfahrensführung in Abhängigkeit vom Betriebszustand der Brennkraftmaschine eingestellt. Der Betriebszustand wird vorzugsweise durch mehrere Sensoreinrichtungen insbesondere einen Brennraumtemperatursensor erfaßt.

Die eingangs angegebenen Aufgabe wird erfindungsgemäß auch gelöst durch eine Anordnung zur Bereitstellung eines brennfähigen Arbeitsgases aus kryogen gespeichertem Kryo-Kraftstoff und sauerstoffhaltiger Ansaugluft in dem Brennraum einer Brennkraftmaschine, mit einer Entnahmeeinrichtung zur Entnahme von Kryokraftstoff aus einem wärmeisolierten Kraftstoffvorratsbehältnis, einem Wärmetauscher zur Erwärmung des entnommen Kryo-Kraftstoffes und zur Kühlung eines Teilstromes der Abgases der Brennkraftmaschine auf eine Temperatur unterhalb des Taupunktes, wobei eine Ableitungseinrichtung vorgesehen ist, zur gesteuerten Rückführung zumindest eines Teiles des in dem Wärmetauscher anfallenden Wassers zurück in den Brennraum.

Der Wärmetauscher ist vorzugsweise als Flüssig/Gas Wärmetauscher ausgebildet, so daß der Kraftstoff zumindest abschnittsweise in flüssigem Zustand den Wärmetauscher durchströmt. Hierdurch werden auf zuverlässige Weise hinreichend kalte Abschnitte in dem Wärmetauscher gebildet. Der Wärmetauscher ist vorzugsweise ein Gegenstromwärmetauscher.

Vorzugsweise ist eine Fördereinrichtung vorgesehen, zur Förderung des Kryo-Kraftstoffs durch den Wärmetauscher unter einem gegenüber dem Tankdruck erhöhten Druck

Die Abzweigung des Abgasteilstromes zu dem kraftstoffgekühlten Wärmetauscher erfolgt vorzugsweise über eine Dosiereinrichtung, zur Einstellung des über den Wärmetauscher geführten Abgasstromes in Abhängigkeit vom Betriebszustand der Brennkraftmaschine.

Weitere vorteilhafte Einzelheiten der Erfindung ergeben sich aus der nachfolgenden Beschreibung in Verbindung mit der Zeichnung mehrerer bevorzugter Ausführungsbeispiele. Es zeigen:
**Fig.1** eine Schema-Darstellung einer bevorzugten Ausführungsform eines erfindungsgemäßen, Systems mit einer Abzweigungseinrichtung zur Abzweigung eines Abgasteilstromes und einem durch Kryo-Kraftstoff gekühlten Wärmetauscher zur Kondensation des in dem Abgasteilstrom enthaltenen Wassers;
**Fig.2** eine Schema-Darstellung einer zweiten bevorzugten Ausführungsform eines erfindungsgemäßen, Systems bei welchem das zurück gewonnene Wasser einem durch äußere Gemischbildung generierten Arbeitsgas zugeführt wird;
**Fig.3** eine Schema-Darstellung einer dritten bevorzugten Ausführungsform eines erfindungsgemäßen Systems, bei welchem das zurück gewonnene Wasser, die Kraftstofffraktion und die Oxydationsmittelfraktion, jeweils für sich separat in den Brennraum eingebracht werden;
**Fig.4** eine Schema-Darstellung einer vierten bevorzugten Ausführungsform eines erfindungsgemäßen Systems, bei welchem das zurück gewonnene Wasser und die Kraftstofffraktion gemeinsam jedoch separat von der Oxydationsmittelfraktion in den Brennraum eingebracht werden;
**Fig.5** eine Schema-Darstellung einer fünften bevorzugten Ausführungsform eines erfindungsgemäßen Systems, bei welchem das zurückgewonnene Wasser und die Oxydationsmittelfraktion gemeinsam jedoch separat von der Kraftstofffraktion in den Brennraum eingebracht werden.

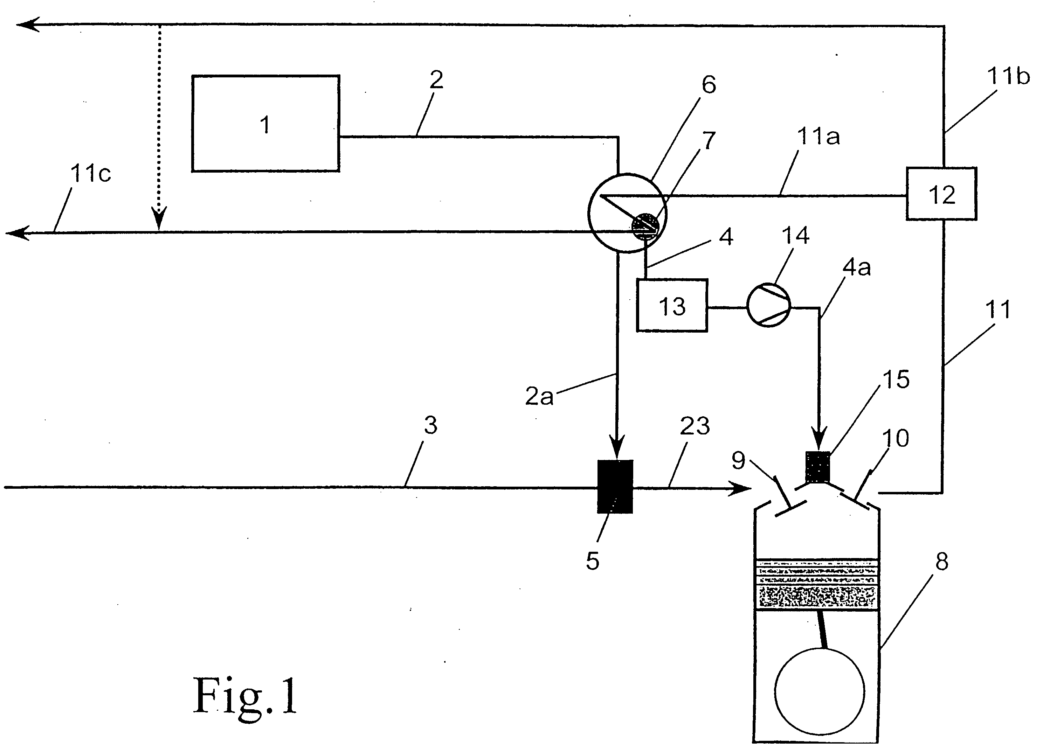

Das in Figur 1 schematisch dargestellte System umfaßt einen thermisch isolierten Kryo-Tank 1 in welchem ein auf seine kritische Temperatur gekühlter Kraftstoff bevorratet ist. Bei dem hier gezeigten System ist der Kryo-Tank 1 als Drucktank ausgebildet, wobei im Inneren des Kryo-Tanks 1 ein Druck im Bereich von 1 bis 28 bar herrscht.

An den Kryo-Tank 1 ist eine Leitungseinrichtung 2 angeschlossen. Diese Leitungseinrichtung 2 ist ebenfalls thermisch isoliert ausgebildet. Über die Leitungseinrichtung 2 kann selektiv flüssiger oder gasförmiger Kraftstoff aus dem Kryo-Tank 1 entnommen werden.

Die Leitungseinrichtung 2 führt über einen nach außen thermisch isolierten Wärmetauscher 6 zu einem Leitungsabschnitt 2a. Über den Leitungsabschnitt 2a ist die Leitungseinrichtung 2 unter Zwischenschaltung des Wärmetauschers 6 mit einem Mischer 5 verbunden.

Durch den Mischer 5 wird das Arbeitsgas nach Maßgabe eines vorgegebenen stöchiometrischen Verhältnises aus dem Kryo-Kraftstoff und einer Oxydationsmittelfraktion - beispielsweise angesaugter Luft, gebildet.

An den Wärmetauscher 6 ist eine hier als Abzweigleitung 11a bezeichnete Leitungseinrichtung angeschlossen über welche wasserhaltiges Abgas dem Wärmetauscher 6 zuströmen kann. Die Abzweigleitung führt zu einem Abgasleitungsabschnitt 11c über welchen das in dem Wärmetauscher gekühlte und zumindest teilweise entfeuchtete Abgas abgeleitet werden kann.

Die Abzweigleitung 11a ist über eine Dosiereinrichtung 12 an eine Abgashauptleitung 11 angeschlossen. Über die Dosiereinrichtung 12 kann in Abhängigkeit vom momentanen Betriebszustand eines Motors 8 der zum Wärmetauscher 6 hin abgezweigte Abgasvolumenstrom reguliert werden. Der verbleibende Abgasstrom kann über eine Rest-Abgasleitung 11b abgeleitet werden. Es ist möglich, die beiden Abgasleitunggen 11b und 11c vorzugsweise vor einem gemeinsamen Endschalldämpfer zusammenzuführen, wie dies hier durch eine Punktlinie angedeutet ist.

In dem Wärmetauscher 6 wird das abgezweigte Abgas durch den Kraftstoff auf eine Temperatur unterhalb des Taupunktes abgekühlt. Das hierbei ausfallende Wasser wird über eine Ableitungseinrichtung 7 vom Abgasstrom abgeschieden und über eine Kondenswasserleitung 4 zu einem Zwischentank 13 geleitet.

Über eine Pumpe 14 kann das in dem Zwischentank 13 aufgefangene Kondenswasser zu einem Einspritzsystem 15 geleitet werden. Über dieses Einspritzsystem 15 ist es möglich, das Kondenswasser in Abhängigkeit vom Betriebszustand der Brennkraftmaschine in den Brennraum der Brennkraftmaschine einzuspritzen.

Der durch den Wärmetauscher 6 erwärmte Kraftstoff gelangt in gasförmigem Zustand in den Mischer 5 und kann in diesem nach Maßgabe eines vorbestimmten Mischungsverhältnisses mit der über die Leitung 3 zugeführten Luft gemischt werden. Über eine sich an den Mischer 5 anschließende Leitung 23 kann das brennfähige Gemisch über eine Einlaßventileinrichtung 9 während eines Ansaugtaktes in den Brenn- oder Arbeitsraum der Brennkraftmaschine 8 gelangen.

Bei dem hier dargestellten Ausführungsbeispiel erfolgt die Zumischung des Kondenswassers über das Einspritzsystem 15 erst nach dem Schließen des Einlaßventiles 9 während eines Verdichtungshubes. Hierdurch wird insbesondere bei Betriebszuständen mit hohem Verdichtungsdruck Motorklopfen verhindert.

In den nachfolgend erläuterten Figuren werden für gleichwirkende Komponenten die gleichen Bezugszeichen verwendet wie in der vorangegangenen Erläuterung zu dem Ausführungsbeispiel nach Fig. 1. Die Erläuterungen zu Fig. 1 gelten für die nicht wiederholt beschriebenen und bezugszeichengleich gekennzeichneten Komponenten, sinngemäß.

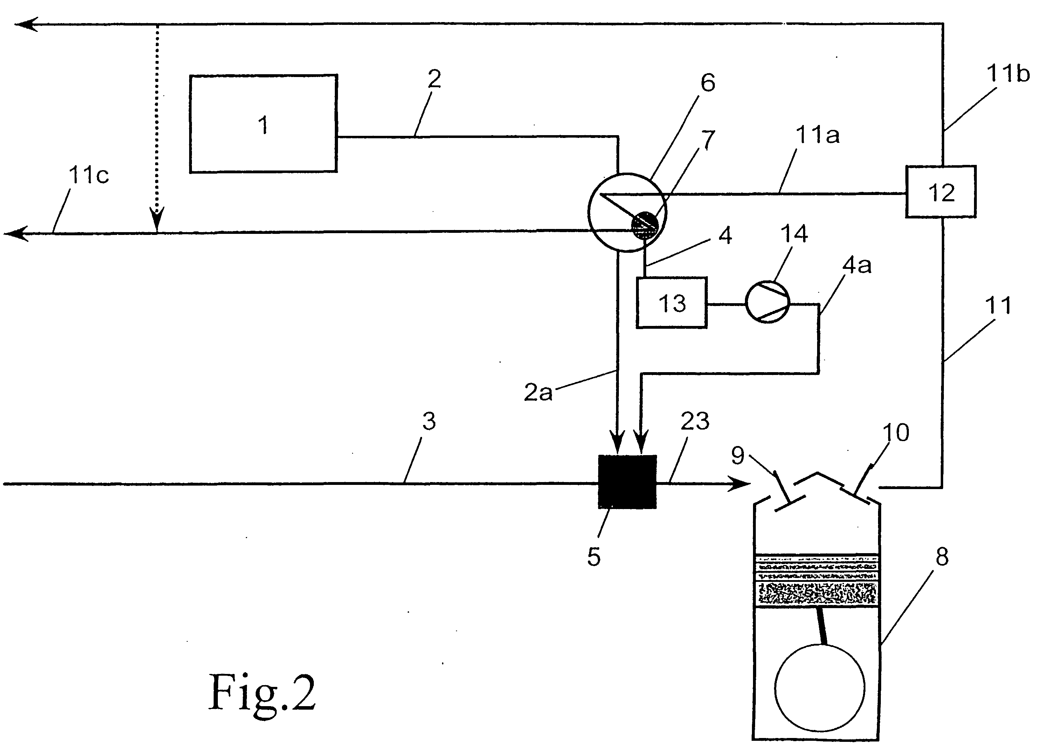

Das in Fig. 2 dargestellte System unterscheidet sich von dem vorangehend in Verbindung mit Fig.1 beschriebenen System dadurch, daß das aus einem Abgasteilstrom über einen kraftstoffgekühlten Wärmetauscher gewonnene Kondensat bereits in dem Mischer 5 dem Arbeitsgas beigemischt wird. Hierdurch kann bei Systemen mit äußerer Gemischbildung auf vorteilhafte Weise etwaigen Rückzündungen vorgebeugt werden. Es ist möglich, die beiden Systeme nach den Fig. 1 und 2 miteinander zu kombinieren, so daß selektiv eine innere und/oder äußere Befeuchtung des Arbeitsgases ermöglicht ist.

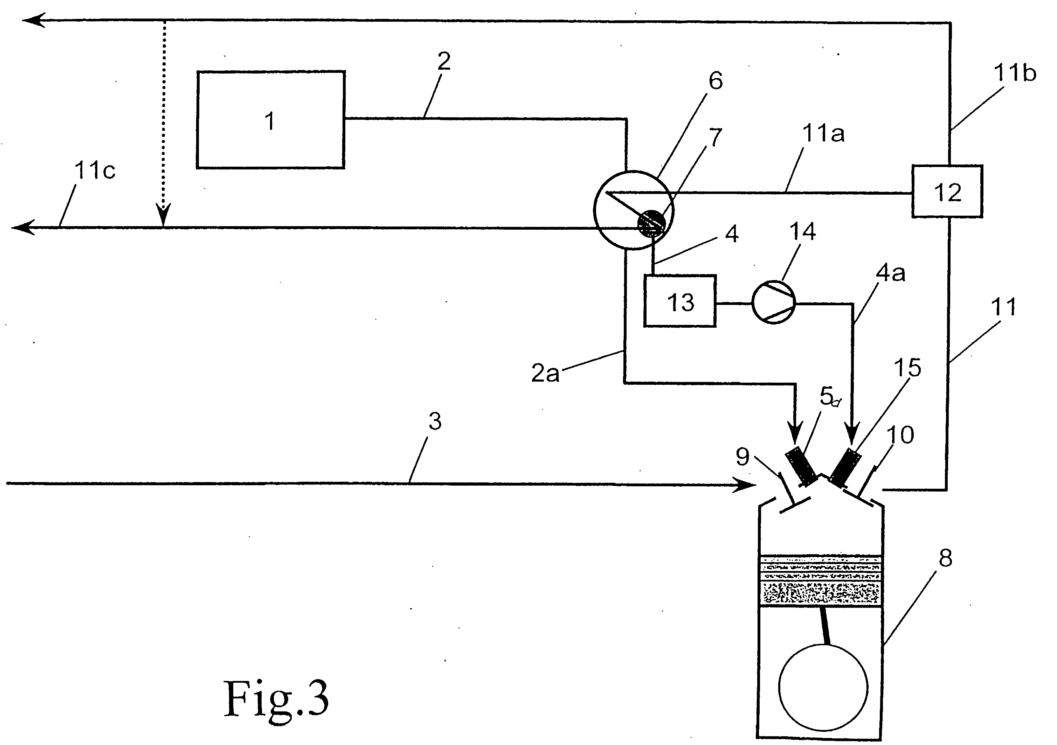

Bei dem in Fig. 3 dargestellten System erfolgt die Bildung des brennfähigen Arbeitsgases innerhalb des Brenn- bzw. Arbeitsraumes. Hierzu wird über die Leitung 3 gefilterte Umgebungsluft während eines Ansaugtaktes in den Brenn- oder Arbeitsraum über die Einlaßventileinrichtung 9 geleitet. Die Zumischung der über die Leitung 2a anstehenden Kraftstofffraktion sowie des über die Leitung 4a anstehenden Befeuchtungswassers erfolgt separat über eine Kraftstoffeinspeiseeinrichtung 5a bzw. die (Wasser-) Einspritzeinrichtung 15.

Die Ansteuerung der Kraftstoffeinspeiseeinrichtung 5a sowie der Einspritzeinrichtung 15 erfolgt über eine Steuereinheit in Abhängigkeit vom momentanen Betriebszustand der Brennkraftmaschine.

Insbesondere bei dieser Ausführungsform ist es möglich, die Brennkraftmaschine in einem Selbstzündungsverfahren zu betreiben, bei welchem die Zuführung der Kraftstofffraktion erst bei einem entsprechenden Verdichtungsdruck erfolgt.

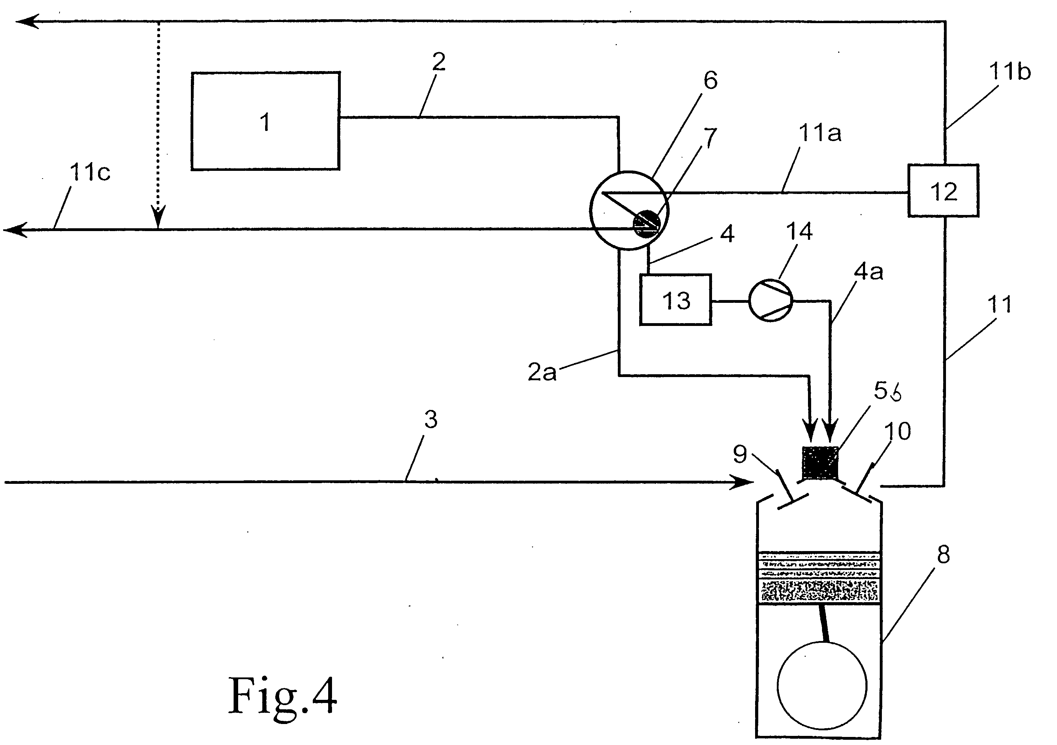

In Fig. 4 ist eine vierte Ausführungsform eines Systems mit Abgas-Teilkondensation dargestellt, bei welchem abweichend von den vorangehend beschriebenen Systemen die Kraftstofffraktion und das Befeuchtungswasser gemeinsam über eine Einspeiseeinrichtung 5b in den Brenn- oder Arbeitsraum eingebracht werden. Die Zuleitung der Oxydationsmittelfraktion erfolgt separat über die Einlaßventileinrichtung 9. Es ist möglich, die Einspeisung des befeuchteten Kraftstoffes zeitlich derart abzustimmen, daß die Einspeisung erst dann erfolgt, wenn in dem Arbeitsraum der Brennkraftmaschine bereits ein Druck herrscht, der annähernd auf dem Druckniveau des Kraftstoffes liegt. Hierbei wird ein besonders hoher Zylinderfüllungsgrad erreicht.

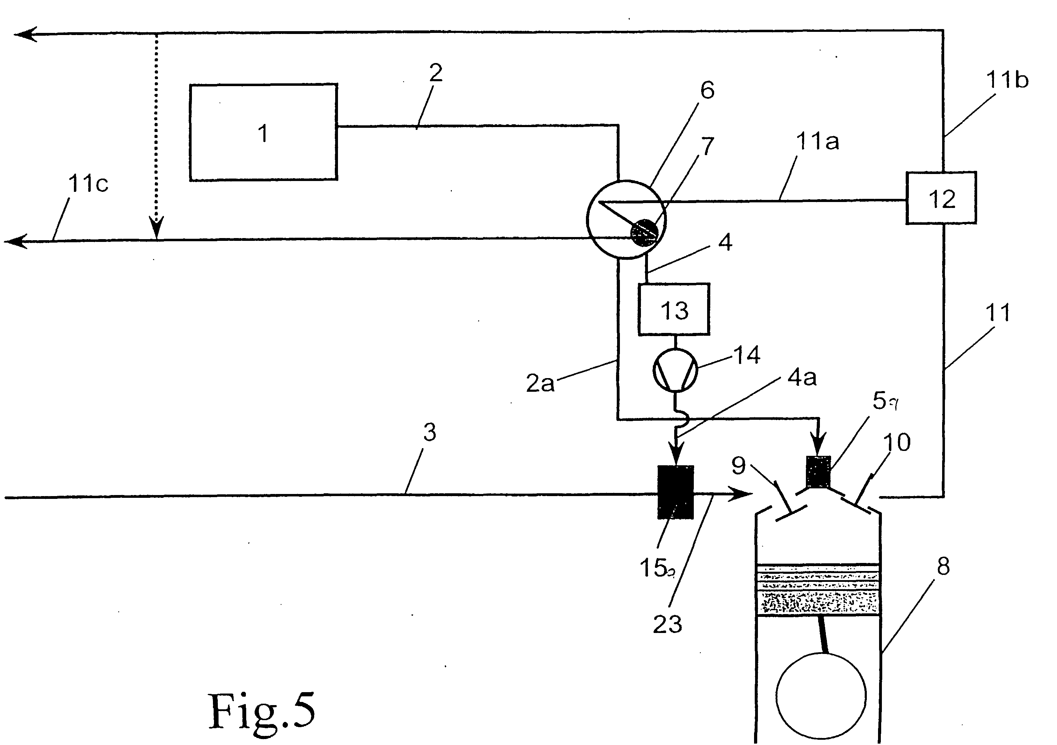

Bei dem in Fig. 5 gezeigten System erfolgt die Zuleitung des Befeuchtungswassers zu dem Brenn- oder Arbeitsraum gemeinsam mit der Ansaugluft. Hierzu wird die Ansaugluft über einen Befeuchter 15 bereits vor Überströmen der Einlaßventileinrichtung befeuchtet. Die Bildung eines brennfähigen Arbeitsgases erfolgt erst innerhalb des Brenn- oder Arbeitsraumes indem die Kraftstofffraktion über die Kraftstoffeinspeiseeinrichtung 5a separat zugeführt wird.

Der Druck in dem Kryo-Tank 1 herrschende Druck liegt vorzugsweise auf einem Druckniveau das bereit dem Einspeisedruck in den Brennraum oder dem Beimischungsdruck im Mischer 5 entspricht.

Es ist möglich, über eine dem Kraftstoffwärmetauscher vorgelagerte Fördereinrichtung den Kraftstoffdruck im Wärmetauscher über das Druckniveau im Kryo-Tank anzuheben. Diese Maßnahme erweist sich insbesondere bei den Systemen nach den Figuren 3,4 und 5 als besonders vorteilhaft.

Unter dem Begriff - Ansaugluft - ist im vorliegenden Fall ein gasförmiges Medium zu verstehen das zumindest eine als Oxydationsmittel wirksame Gasfraktion enthält. Die Zuleitung der Ansaugluft zu dem Einlaßbereich der Brennkraftmaschine kann auch unter einem Druck erfolgen, der oberhalb des Umgebungsdruckes liegt. Bei der hier nur vereinfacht dargestellten Brennkraftmaschine handelt es sich um eine Hubkolbenmaschine. Der Gaswechsel erfolgt vorzugsweise nach dem 4-Takt Prinzip über zeitlich gesteuerte Ventile. Es ist möglich, die erfindungsgemäß vorgeschlagene Arbeitsgasbereitung auch bei Zweitaktverfahren vorzunehmen. Die Zündung des verdichteten Arbeitsgases kann durch Fremd- oder Selbstzündung erfolgen.

## Patentansprüche

1. Verfahren zur Bereitstellung eines brennfähigen Arbeitsgases für eine Brennkraftmaschine aus einer ein Oxidationsmittel enthaltenden Gasfraktion und einem kryogen gespeicherten Kryo-Kraftstoff, bei welchem der Kryo-Kraftstoff aus einem Wärmersolierten Kraftstoff-Vorratsbehältnis entnommen wird, wobei zumindest ein Teil des aus einem Abgas ausgefällten Wassers abgeleitet wird und erneut in einen Brennraum der Brennkraftmaschine eingebracht wird,
**dadurch gekennzeichnet, dass**
der entnommene Kraftstoff durch einen Wärmetauscher geleitet und hierbei erwärmt wird, wobei durch den Wärmetauscher ein Abgasteilstrom geleitet wird und auf eine Temperatur abgekühlt wird, bei welcher zumindest ein Teil des in dem Abgas enthaltenen Wassers ausgefällt wird.

2. Verfahren nach Anspruch 1, **dadurch gekennzeichnet, dass** das zurückgewonnene Wasser separat von den Gasfraktionen des Arbeitsgases in den Brennraum eingebracht wird.

3. Verfahren nach einem der Ansprüche 1 oder 2,
**dadurch gekennzeichnet, dass** eine brennfähige Arbeitsgasmischung im Rahmen eines äußeren Gemischbildungsschrittes außerhalb des Brennraumes gebildet wird.

4. Verfahren nach einem der Ansprüche 1 oder 2,
**dadurch gekennzeichnet, dass** eine brennfähige Arbeitsgasmischung im Rahmen eines inneren Gemischbildungsschrittes innerhalb des Brennraumes gebildet wird.

5. Verfahren nach wenigstens einem der Ansprüche 1 bis 4,
**dadurch gekennzeichnet, dass** die Art der Gemischbildung in Abhängigkeit vom Betriebszustand der Brennkraftmaschine ausgewählt wird.

6. Verfahren nach wenigstens einem der Ansprüche 1 bis 5,
**dadurch gekennzeichnet, dass** das zur Brenngasbefeuchtung vorgesehene Wasser im Rahmen eines inneren Gemischbildungsschrittes gemeinsam mit der Wasserstofffraktion separat von der Ansaugluft in den Brennraum eingebracht wird.

7. Verfahren nach wenigstens einem der Ansprüche 1 bis 6,
**dadurch gekennzeichnet, dass** der Kraftstoff zumindest abschnittsweise in flüssigem Zustand durch den Wärmetauscher geleitet wird.

8. Verfahren nach wenigstens einem der Ansprüche 1 bis 6,
**dadurch gekennzeichnet, dass** der Wärmetausch zwischen dem Abgas und dem Kraftstoff nach dem Gegenstromprinzip erfolgt.

9. Verfahren nach wenigstens einem der Ansprüche 1 bis 8,
**dadurch gekennzeichnet, dass** der zum Wärmetauscher abgezweigte Abgasteilstrom vorab durch einen Umgebungsluftwärmetauscher gekühlt wird.

10. Verfahren nach wenigstens einem der Ansprüche 1 bis 9,
**dadurch gekennzeichnet, dass** der Kraftstoff eine Temperatur von weniger als 24 K aufweist.

11. Verfahren nach wenigstens einem der Ansprüche 1 bis 10,
**dadurch gekennzeichnet, dass** die dem Brennraum zugeführte Wassermenge in Abhängigkeit vom Betriebszustand der Brennkraftmaschine eingestellt wird.

12. Verfahren nach wenigstens einem der Ansprüche 1 bis 11,
**dadurch gekennzeichnet, dass** der Kryo-Kraftstoff separat von der gekühlten und getrockneten Luft in den Brennraum eingebracht wird.

13. Verfahren nach wenigstens einem der Ansprüche 1 bis 12,
**dadurch gekennzeichnet, dass** die Ansaugluft über eine dem Wärmetauscher vorangestellte Fördereinrichtung insbesondere einen Lader, dem Brennraum zugeführt wird.

14. Anordnung zur Bereitstellung eines brennfähigen Arbeitsgases aus kryogengespeichertem Kryo-Kraftstoff und sauerstoffhaltiger Ansaugluft in dem Brennraum einer Brennkraftmaschine, mit einer Entnahmeeinrichtung zur Entnahme von Kryo-Kraftstoff aus einem Wärmeisolierten Kraftstoff-Vorratsbehältnis, einem Wärmetauscher zur Erwärmung des entnommenen Kryo-Kraftstoffes und zur Kühlung eines Teilstromes des Abgases der Brennkraftmaschine auf eine Temperatur unterhalb des Taupunktes, wobei eine Ableitungseinrichtung vorgesehen ist, zur gesteuerten Rückführung zumindest eines Teiles des in dem Wärmetauscher anfallenden Wassers zurück in den Brennraum.

15. Anordnung nach Anspruch 14,
**dadurch gekennzeichnet, dass** der Wärmetauscher (6) als Flüssig-/Gas-Wärmetauscher ausgebildet ist, derart, dass der Kraftstoff zumindest abschnittsweise in flüssigem Zustand den Wärmetauscher (6) durchströmt.

16. Anordnung nach Anspruch 14 oder 15,
**dadurch gekennzeichnet, dass** der Wärmetauscher (6) ein Gegenstromwärmetauscher ist.

17. Anordnung nach wenigstens einem der Ansprüche 14 bis 16,
**dadurch gekennzeichnet, dass** eine Fördereinrichtung vorgesehen ist, zur Förderung des Kryo-Kraftstoffes durch den Wärmetauscher (6) unter einem gegenüber dem Tankdruck erhöhten Druck.

18. Anordnung nach wenigstens einem der Ansprüche 14 bis 17,
**dadurch gekennzeichnet, dass** eine Dosiereinrichtung (12) vorgesehen ist, zur Einstellung des über den Wärmetauscher geführten Abgasstromes.

## Claims

1. A method of preparing a combustible working gas for an internal combustion engine from a gas fraction containing an oxidant and a cryogenically stored cryo-fuel, wherein the cryo-fuel is taken from a heat-insulated storage container and at least some of the water precipitated from an exhaust gas is drained off and returned to a combustion chamber of the engine,
**characterised in that**
the withdrawn fuel is conveyed through and heated in a heat exchanger, through which a part flow of exhaust gas is conveyed and cooled to a temperature at which at least some of the water in the exhaust gas is precipitated.

2. A method according to claim 1, **characterised in that** the recovered water is introduced into the combustion chamber preferably separately from the gaseous fractions of the working gas.

3. A method according to claim 1 or claim 2,
**characterised in that** a combustible working-gas mixture is formed during an external mixture-forming step outside the combustion chamber.

4. A method according to claim 1 or claim 2,
**characterised in that** a combustible working-gas mixture is formed during an internal mixture-forming step inside the combustion chamber.

5. A method according to at least one of claims 1 to 4,
**characterised in that** the manner of mixture formation is selected in dependence on the operating state of the engine.

6. A method according to at least one of claims 1 to 5,
**characterised in that** the water provided for moistening the combustion gas is introduced into the combustion chamber during an internal mixture-forming step, together with the hydrogen fraction and separately from the intake air.

7. A method according to at least one of claims 1 to 6,
**characterised in that** the fuel, at least in portions, is conveyed in a liquid state through the heat exchanger.

8. A method according to at least one of claims 1 to 6,
**characterised in that** the heat exchange between the exhaust gas and the fuel is effected in accordance with the counter-current principle.

9. A method according to at least one of claims 1 to 8,
**characterised in that** the part-stream of exhaust gas branched off from the heat exchanger is previously cooled by an ambient air heat exchanger.

10. A method according to at least one of claims 1 to 9,
**characterised in that** the fuel is at a temperature of less than 24 K.

11. A method according to at least one of claims 1 to 10,
**characterised in that** the amount of water supplied to the combustion chamber is adjusted in dependence on the operating state of the engine.

12. A method according to at least one of claims 1 to 11,
**characterised in that** the cryo-fuel is introduced into the combustion chamber separately from the cooled, dried air.

13. A method according to at least one of claims 1 to 12,
**characterised in that** the intake air is supplied to the combustion chamber through a conveying device, especially a supercharger, disposed upstream of the heat exchanger.

14. An arrangement for preparing a combustible working gas from cryogenically stored cryo-fuel and oxygen-containing intake air in the combustion chamber of an internal combustion engine, comprising a withdrawal device for withdrawing cryo-fuel from a heat-insulated storage container and a heat exchanger for heating the withdrawn cryo-fuel and cooling a part-flow of the engine exhaust gas to a temperature below the dew point, wherein a draining device is provided for controlled conveyance of at least part of the water arriving in the heat exchanger back to the combustion chamber.

15. An arrangement according to claim 14, **characterised in that** the heat exchanger (6) is a liquid-gas heat exchanger such that the fuel is at least partly in a liquid state when it flows through the heat exchanger (6).

16. An arrangement according to claim 14 or claim 15,
**characterised in that** the heat exchanger (6) is a counter-current heat exchanger.

17. An arrangement according to at least one of claims 14 to 16,
**characterised in that** a device is provided for conveying the cryo-fuel through the heat exchanger (6) at a pressure above the tank pressure.

18. An arrangement according to at least one of claims 14 to 17,
**characterised in that** a metering device (12) is provided for adjusting the flow of exhaust gas conveyed through the heat exchanger.

## Revendications

1. Procédé d'alimentation d'un moteur à combustion interne par un gaz inflammable constitué d'une fraction contenant des agents d'oxydation et d'un carburant cryogénique stocké, ce dernier étant prélevé dans un réservoir de stockage thermiquement isolé, et au moins une partie de l'eau condensée à partir du gaz d'échappement étant séparée et introduite à nouveau dans une chambre de combustion du moteur,
**caractérisé en ce que**
le carburant prélevé passe à travers un échangeur thermique dans lequel il se réchauffe, et dans cet échangeur est envoyé un courant partiel de gaz d'échappement qui s'y trouve refroidi à une température assurant la condensation d'au moins une partie de l'eau contenue dans ce gaz d'échappement.

2. Procédé selon la revendication 1,
**caractérisé en ce que**
l'eau récupérée est introduite dans la chambre de combustion séparément par rapport aux fractions gazeuses du gaz de combustion.

3. Procédé selon la revendication 1 ou 2,
**caractérisé en ce qu'**
un mélange de gaz combustible est formé à l'extérieur de la chambre de combustion au cours d'une étape externe de formation du mélange.

4. Procédé selon la revendication 1 ou 2,
**caractérisé en ce qu'**
un mélange de gaz combustible est formé à l'intérieur de la chambre de combustion au cours d'une étape interne de formation du mélange.

5. Procédé selon une des revendications 1 à 4,
**caractérisé en ce que**
le mode de formation du mélange est choisi en fonction de l'état de fonctionnement du moteur.

6. Procédé selon une des revendications 1 à 5,
**caractérisé en ce que**
l'eau prévue pour humidifier le gaz combustible est introduite dans la chambre de combustion au cours d'une étape interne de formation du mélange en même temps que la fraction aqueuse, mais séparément de l'air aspiré.

7. Procédé selon une des revendications 1 à 6,
**caractérisé en ce que**
le carburant traverse, en étant au moins en partie à l'état liquide, l'échangeur thermique.

8. Procédé selon une des revendications 1 à 6,
**caractérisé en ce que**
l'échange thermique entre le gaz d'échappement et le carburant s'effectue selon le principe du contre-courant.

9. Procédé selon une des revendications 1 à 8,
**caractérisé en ce que**
le courant partiel du gaz d'échappement dérivé sur l'échangeur thermique est préalablement refroidi par un échangeur thermique avec l'air ambiant.

10. Procédé selon une des revendications 1 à 9,
**caractérisé en ce que**
le carburant présente une température inférieure à 24 K.

11. Procédé selon au moins une des revendications 1 à 10,
**caractérisé en ce que**
la quantité d'eau envoyée à la chambre de combustion est réglée en fonction de l'état de fonctionnement du moteur à combustion interne.

12. Procédé selon au moins une des revendications 1 à 11,
**caractérisé en ce que**
le carburant cryogénique est introduit dans la chambre de combustion séparément de l'air refroidi et séché.

13. Procédé selon au moins une des revendications 1 à 12,
**caractérisé en ce que**
l'air d'aspiration est amené à la chambre de combustion par l'intermédiaire d'un dispositif de refoulement disposé en amont de l'échangeur thermique, un compresseur notamment.

14. Appareil d'alimentation de la chambre d'un moteur à combustion interne par un gaz inflammable constitué d'un carburant cryogénique stocké et d'air d'aspiration contenant de l'oxygène, qui comporte un dispositif pour prélever le carburant cryogénique contenu dans un réservoir thermiquement isolé, un échangeur thermique pour réchauffer le carburant prélevé et pour refroidir un courant partiel du gaz d'échappement du moteur à une température inférieure au point de rosée, un système de dérivation étant prévu pour assurer le renvoi commandé, dans la chambre de combustion, d'au moins une partie de l'eau condensée dans l'échangeur thermique.

15. Appareil selon la revendication 14,
**caractérisé en ce que**
l'échangeur thermique (6) est un échangeur liquide/gaz que le carburant traverse, en étant au moins partiellement à l'état liquide.

16. Appareil selon la revendication 14 ou 15,
**caractérisé en ce que**
l'échangeur thermique (6) est du type à contre-courant.

17. Appareil selon au moins une des revendications 14 à 16,
**caractérisé en ce qu'**
un dispositif de refoulement est prévu pour envoyer le carburant cryogénique à travers l'échangeur thermique à une pression supérieure à celle du réservoir.

18. Appareil selon au moins une des revendications 14 à 17,
**caractérisé en ce qu'**
un dispositif de dosage (12) est prévu pour régler le courant de gaz d'échappement traversant l'échangeur thermique.
